Europäisches Patentamt

European Patent Office

Office européen des brevets

(11) Publication number: **0 320 069**
**A2**

# (12) EUROPEAN PATENT APPLICATION

(21) Application number: 88202792.3

(51) Int. Cl.⁴: **G02B 6/44**

(22) Date of filing: 06.12.88

(30) Priority: 11.12.87 DE 3742133

(43) Date of publication of application:
14.06.89 Bulletin 89/24

(84) Designated Contracting States:
AT BE CH DE ES FR GB GR IT LI NL SE

(71) Applicant: **STAMICARBON B.V.**
**Mijnweg 1**
**NL-6167 AC Geleen(NL)**

(72) Inventor: **van der Heiden, Leonardus**
**Hendrikus**
**Koempel 81**
**NL-6372 NG Landgraaf(NL)**

(54) Optical fiber cable.

(57) A cable (10) with optical fibers (18) has a strength member (12), about which fiber buffers (16) with optical fibers (18) are arranged. The fiber buffers (16) with the optical fibers (18) are surrounded by a depletion layer (20) and a sleeve (22), for example of polyethylene. The fiber buffers (16) consist of a tube or hose, which consists of strips of a highly stretched ultrahigh molecular weight polyethylene UHMWPE, which are coated with a linear low density PE (LLDPE) and braided. As well as the sheathing of the optical fibers, the fiber buffers assume the function of a tensile load member, so that it is possible to dispense with additional tensile load members.

EP 0 320 069 A2

## OPTICAL FIBER CABLE

The invention relates to an optical fiber cable having a strength member, having optical fibers, having a tensile load member, having a depletion layer and having a protective sleeve.

Such optical fiber cables are known with which fiber buffers are extruded in situ over one or more optical fibers, for example glass fibers, so that the glass fibers can move freely within the fiber buffer. In many cases, the fiber buffer is additionally filled with a material of petroleum-based gel or with silicone gel, in order to prevent the penetration of moisture. Polypropylene, a coextrusion of aromatic polyamides and DBT or polyamide is conventionally used as material for such fiber buffers. It is required of such fiber buffers that they have a low thermal coefficient of expansion, preferably of less than $2 \times 10^{-5}$ cm/cm//$\square$C and a high dimensional stability under moisture conditions.

In addition to a strength member arranged in the core of the fiber cable, tensile load members are provided in the case of the known optical fiber cables so that, during cable laying, no tension is exerted on the optical fibers, which could mean a rupture of the fibers with associated signal loss. The tensile load members, which are conventionally of tubular design and surround the optical fibers arranged in the fiber buffers, consist for example of Kevlar (T.M.) or aramid yarn. Optical fibers of such configuration are expensive owing to the complex production and materials necessary.

The invention is based on the object of creating an optical fiber cable which can be produced simply and cost-effectively.

This object is achieved according to the invention in that the fiber buffers consist of a linearly highly stretched ultrahigh molecular weight polyethylene (UHMWPE) and are designed as tensile load member.

According to the invention, the tensile load member, which is used in addition to the fiber buffers from conventional optical fiber cables, is combined with the fiber buffers so that the fiber buffers at the same time serve as tensile load member. The result of this is an easier production of the cable which is also less expensive since no Kevlar or aramid is necessary for an additional tensile load member. The fiber buffers designed as tensile load members have a high stability, so that any damage to the optical fibers accommodated in them is avoided.

The fiber buffers preferably consist of uniaxially stretched tapes which are coated on both sides with linear low density polyethylene (LLDPE) and are braided into a tube or hose. The braiding angle of the tapes is 25-35$\square$, preferably 30$\square$. The stretching ratio of the tapes is preferably 20 - 60 and the thickness 35-45 $\mu$m, preferably 40 $\mu$m. The thickness of the coating of the tapes of UHMWPE with LLDPE is preferably 5/20 $\mu$m at 100-110$\square$C.

The fiber buffers may also consist of stretched filaments or yarns which are coated with linear low density polyethylene (LLDPE) and are braided into a tube or a hose.

A process for the production of thin stretched tapes of ultrahigh molecular weight polyolefins is known from German Patent Specification 37 24 434.5. In this case, an ultrahigh molecular weight polyolefin is dissolved in a solvent, the solution is formed into a tape at a temperature above the solvation temperature of the polyolefin and the tape is cooled to a temperature below the solvation temperature for gelation and stretching. In this process, the gelled tape is first subjected to a preorientation in one direction, with solvent removal, and then stretched at elevated temperature in a direction substantially perpendicular to the preorientation direction, after which a subsequent stretching follows. The polyolefins used in this case are preferably polyethylenes, in particular linear polyethylenes, which may contain minor amounts, preferably at most 5 mol %, of one or more other alkenes capable of being copolymerized with them, such as propylene, butylene, pentene, hexene, 4-methylpentene, octene etc. The polyethylene preferably contains 1 to 10, in particular 2 to 6, methyl or ethyl groups per 1000 carbon atoms. The process can also be carried out with the use of other polyolefins, such as polypropylene homopoly mers and polypropylene copolymers. Furthermore, the polyolefins used may also contain minor amounts of one or more other polymers, in particular alkene-1 polymers.

The polyolefins used have an ultrahigh molecular weight, i.e. weight average of the molecular weight of at least $4 \times 10^5$ g/mol, it being possible to use polyolefins of molecular weights of up to $6 \times 10^6$ g/mol and above.

A process for the production of an optical fiber cable provides that tapes of an ultrahigh molecular weight polyethylene (UHMWPE) are produced by the gel process, dried and uniaxially stretched at a stretching ratio of 20 - 60 into tapes of 35-45 $\mu$m thickness, that the tapes are coated on both sides with linear low density polyethylene (LLDPE) in a thickness of 5/20 $\mu$m at 100 - 110$\square$C, that the tapes are cut into strips of 0,5-0,9 mm, that the strips are braided on a heated arbor with simultaneous melting, at angles of 25-35¤ into fiber buffers, and that the optical fibers are arranged in line with the fiber buffers.

Preferably, 16 strips of UHMWPE coated with LLDPE are braided with one another. In particular, the fiber buffers have a diameter of 3,5-4,5 mm, preferably 4 mm.

The fiber buffers of the cables according to the invention, with optical fibers, have a very low coefficient of expansion of less than $2 \times 10^{-5}$ cm/cm/¤C.

Owing to the very high tensile strength and the high modulus, the fiber buffers can assume the function of a tensile load member.

In the table below, a comparison of conventionally used materials for fiber buffers and fiber buffers of uniaxially stretched UHMWPE is given.

|  | Nylon 12 | polypropylene | stretched UHMWPE |
|---|---|---|---|
| Tensile strength | 50 MPa | 38 MPa | 1 GPa |
| Modulus of elasticity | 1.5 GPa | 1.8 GPa | 60 GPa |
| Coefficient of thermal expansion | $0.8 \times 10^{-4}$ | $1.8 \times 10^{-4}$ | $-2 \times 10^{-5}$ |
| Water absorption | 1.5 % | < 0.1 % | < 0.1 % |

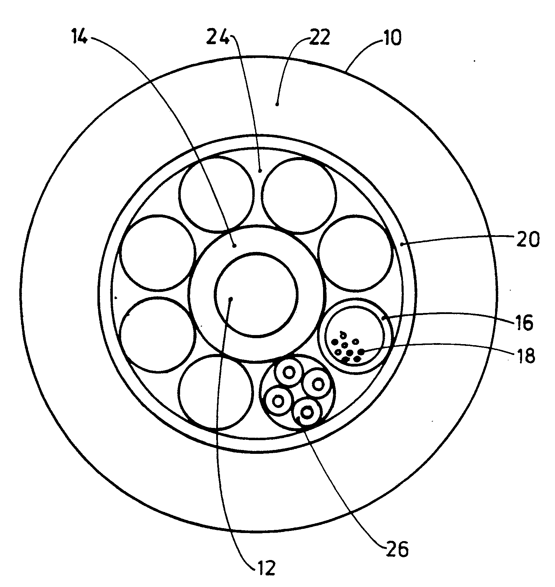

An exemplary embodiment of the invention is explained below with reference to the figure. The figure shows the cross-section through a cable 10 with optical fibers. The cable 10 has, in the center, a fully insulated strength member 12, which may consist for example of metal or Kevlar and ensures that the optical fibers are not damaged by tensile stress, in particular during the laying of the cable. The strength member 12 is surrounded by a cushion 14. The optical fibers 18 are accommodated in fiber buffers 16. In the case of the embodiment shown, nine fiber buffers 18 with optical fibers are arranged around the strength member and the cushion. The fiber buffers consist of a hose or tube of linearly highly stretched ultrahigh molecular weight polyethylene and as well as serving to sheath optical fibers at the same time serve as tensile load members in order to absorb those tensile stresses which cannot be absorbed by the strength member. The fiber buffers are, for example, braided from sixteen strips, which have been cut out of tapes of UHMWPE coated with LLDPE. The braiding of the strips takes place at a braiding angle of 30¤ on a heated arbor, so that a melting of the strips at 100 - 110¤C takes place during the braiding.

The fiber buffers, in which the optical fibers are contained, are surrounded by a depletion layer 20, which is intended to prevent the penetration of moisture. On the outside of the cable, a sleeve 22, for example of polyethylene, is arranged. The free space which is enclosed by the depletion layer 20, the cushion 14 and the fiber buffers 16 is filled with a filling compound 24.

In place of optical fibers, copper conductors 26 may be accommodated in fiber buffers.

## Claims

1. An optical fiber cable having a strength member, having optical fibers in fiber buffers, having a tensile load member, having a depletion layer and having a protective sleeve, wherein the fiber buffers (16) consist of a linearly highly stretched ultrahigh molecular weight polyethylene (UHMWPE) and are designed as tensile load member.

2. An optical fiber cable as claimed in claim 1, wherein the fiber buffers (16) consist of strips of uniaxially stretched tapes, which are coated on both sides with linear low density polyethylene (LLDPE) and are braided into a hose or tube.

3. A cable as claimed in claim 2, wherein the strips are braided at an angle of 25-35¤, preferably 30¤.

4. A cable as claimed in any one of claims 1 to 3, wherein the stretching ratio of the tapes is 20 - 60.

5. A cable as claimed in any one of claims 1 to 4, wherein the thickness of the stretched tapes is 35-45 μm, preferably 40 μm.

6. A cable as claimed in one of claims 1 to 5, wherein the thickness of the coating of the tapes of UHMWPE with LLDPE is approximately 5/20 μm at 100 - 110¤C.

7. An optical fiber cable as claimed in claim 1, wherein the fiber buffer (16) consist of filaments which are coated with linear low density polyethylene (LLDPE) and are braided into a hose or tube.

8. A process for the production of an optical fiber cable as claimed in claims 1 to 6, wherein tapes of ultrahigh molecular weight polyethylene UHMWPE are produced by the gel process, dried, stretched uniaxially at a stretching ratio of 20 to 60 in a thickness of 35-45 μm, wherein the tapes are coated on both sides with a linear low density polyethylene (LLDPE), wherein the tapes are cut into strips of 0,5-0,9 mm, wherein the strios are braided on a heated arbor, with simultaneous melting, at angles of 25-35¤ into fiber buffers, and wherein the optical fibers are arranged in line in the fiber buffers.

9. A process as claimed in claim 8, wherein sixteen tapes of UHMWPE coated with LLDPE are braided with one another.

10. A process as claimed in claim 8 or 9, wherein the fiber buffers have a diameter of 3,5-4,5 mm preferably 4mm.